# EUROPÄISCHE PATENTSCHRIFT

(11) **EP 1 474 614 B1**
(45) Veröffentlichungstag und Bekanntmachung des Hinweises auf die Patenterteilung: **21.06.2006**
(21) Anmeldenummer: 03704298.3
(22) Anmeldetag: 10.02.2003
(51) Int. Cl.: F16C 11/06

(54) **VERFAHREN SOWIE EINE VORRICHTUNG ZUR MONTAGE VON KUGELGELENKEN MIT MINDESTENS EINEM ANSCHLUSSTEIL**
METHOD AND DEVICE FOR ASSEMBLING BALL-AND-SOCKET JOINTS COMPRISING AT LEAST ONE CONNECTING PART
PROCEDE ET DISPOSITIF DE MONTAGE DE JOINTS A ROTULE AYANT AU MOINS UNE PIECE DE RACCORDEMENT

(30) Priorität: 15.02.2002 DE 10206622
(43) Veröffentlichungstag der Anmeldung: 10.11.2004
(73) Patentinhaber: ZF Lemförder Metallwaren AG, 49448 Lemförde (DE)
(72) Erfinder: ERSOY, Metin, 65396 Walluf (DE); GRUBE, Volker, 49356 Diepholz (DE); NACHBAR, Frank, 49448 Lemförde (DE); ZEIBIG, Uwe, 77855 Achern (DE)
(86) Internationale Anmeldenummer: PCT/DE2003/000360
(87) Internationale Veröffentlichungsnummer: WO 2003/069171

(56) Entgegenhaltungen:
- DE-C- 899 170
- FR-A- 2 588 623
- US-A- 2 928 687
- US-A- 3 846 032
- US-A- 3 999 872

## Beschreibung

Die Erfindung betrifft ein Verfahren sowie eine Vorrichtung zur Montage von Kugelgelenken mit mindestens einem Anschlussteil, wobei ein erstes Kugelgelenkgehäuseteil einer Montagevorrichtung zugeführt wird, ein Kugelzapfen umgeben von einer Lagerschale in das erste Kugelgelenkgehäuse eingesetzt wird, ein zweites, das Kugelgelenk schließendes Gehäuseteil an dem ersten Kugelgelenkgehäuseteil positioniert wird, sowie ein Anschlussteil zu dem Kugelgelenkgehäuse platziert wird und das die Gehäuseteile miteinander und mit dem Anschlussteil kraft-, form- und/ oder stoffschlüssig über eine entsprechende Verbindung gefügt werden.

Derartige Verfahren kommen üblicherweise in Fertigungsbetrieben der Automobilzulieferindustrie beispielsweise bei der Montage von Querlenkern zum Einsatz. Für die gelenkige Lagerung von Querlenkern in Fahrzeugen kommen aufgrund der auftretenden Kräfte und Bewegungen nur Kugelgelenke in Frage. Ein Kugelgelenk besteht dabei mindestens aus einem ein- oder mehrteiligen Kugelgelenkgehäuse, einer ein- oder mehrteiligen Lagerschale, und einem Kugelzapfen, wobei der Kugelzapfen in der Lagerschale gelagert ist, welche wiederum von dem Gehäuse umschlossen ist. Dabei muss der Kugelzapfen so in dem Gehäuse bzw. in der Lagerschale untergebracht werden, dass keine Bewegungen in axialer Richtung des Kugelzapfens möglich sind. Dies wird in der Praxis durch ein Übermaß des Kugelzapfendurchmessers gegenüber der Kugelzapfenöffnung des Kugelgelenkgehäuses erreicht.

Aus der deutschen Patentanmeldung DE 38 26 987 ist ein Verfahren zur Herstellung eines Kugelgelenks bekannt. Dabei wird um einen in ein als Form ausgebildetes Gehäuse eingebrachten Kugelzapfen eine Lagerschale mittels Urformverfahren hergestellt und anschließend das Gehäuse mittels Umformverfahren geschlossen.
In der Praxis folgt daran in einem separaten Arbeitsschritt das Zusammenfügen mit einem Anschlussteil. Als ein Anschlussteil im Sinne der vorliegenden Erfindung wird insbesondere ein Querlenker eines Kraftfahrzeuges verstanden.

Bei den bekannten Verfahren tritt der Nachteil auf, dass durch mehrere Arbeitsgänge unnötig Zeit, zum Beispiel Rüstzeit, und Kosten, zum Beispiel Transportkosten, aufgewendet werden müssen. Weiterhin müssen enge Toleranzen eingehalten werden, da aufgrund der getrennten Herstellungsorte keine Abstimmung der verschiedenen Herstellungsverfahren erfolgt und damit die Toleranz des genausten Herstellungsverfahren eingehalten werden muss, obwohl bei anderen Herstellungsverfahren eine größere Toleranz ausreichen würde.

Es ist daher die Aufgabe der vorliegenden Erfindung ein Verfahren zur Herstellung und Montage von Kugelgelenken mit Anschlussteilen zu schaffen, bei der der Montageaufwand reduziert ist, sowie eine Vorrichtung bereitzustellen, mit der dieses Verfahren ausführbar ist.

Diese Aufgabe wird durch ein Verfahren gemäß Anspruch 1 und eine Vorrichtung gemäß Anspruch 8 gelöst. Vorteilhafte Weiterbildungen der Erfindung sind in den abhängigen Ansprüchen angegeben.

Die Erfindung betrifft ebenfalls ein Kugelgelenk gemäß Anspruch 9.

Die Erfindung schließt die technische Lehre ein, dass die Kugelgelenkherstellung und die Zusammenfügung von Kugelgelenk und Anschlussteil in einem Verfahrensschritt zusammengefasst sind. Zur Montage von Kugelgelenken und deren Verbindung mit mindestens einem Anschlussteil wird erfindungsgemäß ein erstes Kugelgelenkgehäuseteil einer Montagevorrichtung zugeführt, ein Kugelzapfen umgeben von einer Lagerschale in das erste Kugelgelenkgehäuse eingesetzt, ein zweites, das Kugelgelenk schließendes Gehäuseteil an dem ersten Kugelgelenkgehäuseteil positioniert, sowie ein Anschlussteil zu dem Kugelgelenkgehäuse platziert und die Gehäuseteile miteinander und mit dem Anschlussteil kraft-, form- und/ oder stoffschlüssig über eine entsprechende Verbindung gefügt.

Diese Lösung bietet den Vorteil, dass aufgrund der Zusammenfassung mehrerer Schritte des Herstellungsverfahrens zu einem Schritt sich der Montageaufwand erheblich reduzieren lässt. Zudem lässt sich durch die Zusammenfassung der Schritte Zeit - beispielsweise Rüstzeit, Transportzeit - sowie Material - beispielsweise Verpackungsmaterial, zusätzliches Sicherungsmaterial für den Transport - einsparen. Durch eine Abstimmung mehrerer Herstellungsschritte können die Toleranzen einzelner Komponenten weiter gefasst werden, wodurch die Komponenten preiswerter und robuster ausführbar sind.

Eine die Erfindung verbessernde Maßnahme sieht vor, dass das Kugelgelenk und das Anschlussteil mittels Schweißverfahren miteinander gefügt werden, da so eine einfach zu realisierende und kostengünstige Verbindung hergestellt werden kann. Zudem lässt sich der Fügevorgang aufgrund der Vielzahl von Schweißverfahren an verschiedene Materialien anpassen.

Eine weitere die Erfindung verbessernde Maßnahme sieht vor, dass das Zusammenfügen der Teile mittels Laserstrahlschweißen erfolgt, wodurch eine einfache, kostengünstige, schnelle und gut zu automatisierende Fertigung realisiert wird. Beim Laserstrahlschweißen ist wegen der vergleichsweise geringen Wärmeeinbringung in die Teile mit einem geringen Wärmeverzug zu rechnen, so dass enge Toleranzen eingehalten werden können.

Das Zusammenfügen der Einzelteile kann vorteilhafter Weise mittels Punktschweißung erfolgen. Hierdurch kann eine schnelle und äußerst preiswerte Verbindung hergestellt werden, die zudem gut automatisierbar ist.

Es ist auch denkbar, das Zusammenfügen der Einzelteile mittels umlaufender Schweißnaht zu realisieren, falls höhere Beanspruchungen der Verbindung auftreten.

Als eine vorteilhafte Weiterbildung kann das Kugelgelenk und das Anschlussteil auch mittels Löten oder Klebeverbindung gefügt werden. Diese Fügeverfahren stellen preisgünstige Alternativen zum Schweißen dar, für den Fall, dass Schweißverfahren materialbedingt nicht einsetzbar sind.

Vorzugsweise ist das Anschlussteil ein Lenkergehäuse eines Querlenkers eines Kraftfahrzeuges. Es ist jedoch auch denkbar, dass als Anschlussteil des Kugelgelenks andere Bauteile Verwendung finden.

Von besonderem Vorteil ist es, dass die Einzelteile konstruktiv dem Verfahren entsprechend ausgebildet sind. Somit ist es möglich, alle Einzelteile in einem einzigen Fügungsschritt zusammen zu fügen, womit sich ein enormer Zeitvorteil ergibt.

Ein weiterer Vorteil ist es, dass die Gehäuseteile mittels Umformverfahren herstellbar sind, da so bei geeignetem Umformverfahren - beispielsweise Tiefziehen - die Gehäuseteile ohne zusätzliche Bearbeitungsschritte gefertigt werden können.

Vorzugsweise sind die Gehäuseteile miteinander und mit dem Anschlussteil kraft-, form- und/ oder stoffschlüssig ohne oder über ein Verbindungselement verbunden, wobei das Verbindungselement so angeordnet ist, dass das Kugelgelenkgehäuse zusammen mit dem Anschlussteil eine verbundene Einheit darstellt. Das Anschlussteil ist dabei im wesentlichen in Höhe der Trennlinie zwischen den Kugelgelenkgehäusen angeordnet. Die Verbindung kann sowohl je zwei Teile - zum Beispiel die beiden Kugelgelenkgehäuseteile miteinander und das Kugelgelenkgehäuse und das Anschlussteil miteinander - oder aber auch mehrere Teile - also zum Beispiel zwei Kugelgelenkgehäuseteile und das Anschlussteil miteinander -zu einer Einheit verbinden. Die Verbindung kann sowohl lösbar - beispielsweise über eine entsprechende Schrauben- oder Schellenverbindung - als auch unlösbar - beispielsweise über eine Schweiß-, Löt-, oder Klebeverbindung erfolgen. Dabei können auch unterschiedliche Verbindungsarten zusammen eingesetzt werden. So können beispielsweise die beiden Kugelgelenkgehäuseteile miteinander über eine andere Verbindungsart als beispielsweise das Kugelgelenkgehäuse mit dem Anschlussteil verbunden sein. Im Falle einer stoffschlüssigen Verbindung ist das Verbindungselement bevorzugt eine Schweißnaht, welche sowohl punktförmig als auch umlaufend ausgebildet sein kann.

Das Kugelgelenk kann vorteilhaft so ausgebildet sein, dass das zweite Kugelgelenkgehäuseteil eine äußere stirnseitige Auflagefläche aufweist auf der eine äußere stirnseitige Auflagefläche des ersten Kugelgelenkgehäuseteils aufliegt und das zweite Kugelgelenkgehäuseteil eine stirnseitige äußere Anlagefläche aufweist an der eine äußere stirnseitige Anlagefläche des ersten Kugelgelenkgehäuseteils anliegt, wobei ein Anschlussteil zwischen dem ersten und dem zweiten Kugelgelenkgehäuseteil so eingepasst ist, dass es mit einer ersten äußeren Oberfläche des ersten Kugelgelenkgehäuseteils und einer zweiten äußeren Oberfläche des zweiten Kugelgelenkgehäuseteils sowie einer stirnseitigen Auflagefläche des zweiten Kugelgelenkgehäuseteils in Kontakt steht und das Anschlussteil mit dem zweiten Kugelgelenkgehäuseteil über eine stoffschlüssige Verbindung zwischen der Auflagefläche des Anschlussteils und der äußeren Oberfläche des zweiten Kugelgelenkgehäuseteils ortsfest verbunden ist.

Bevorzugt ist das Kugelgelenk so ausgebildet, dass das erste Kugelgelenkgehäuseteil eine erste äußere stirnseitige Auflagefläche auf der eine erste äußere Auflagefläche des zweiten Kugelgelenkgehäuseteils aufliegt, eine zweite äußere Auflagefläche auf der eine zweite äußere Auflagefläche des zweiten Kugelgelenkgehäuseteils und eine erste äußere Anlagefläche an der eine äußere Anlagefläche des zweiten Kugelgelenkgehäuseteils anliegt aufweist, wobei ein Anschlussteil, das mit einer äußeren Anlagefläche an einer zweiten äußeren Anlagefläche des ersten Kugelgelenkgehäuseteils anliegt und das Anschlussteil mit dem ersten Kugelgelenkgehäuseteil über eine stoffschlüssige Verbindung zwischen einer äußeren Oberfläche des Anschlussteils, einer äußeren Oberfläche des zweiten Kugelgelenkgehäuseteils und der zweiten äußeren Anlagefläche des ersten Kugelgelenkgehäuseteils verbunden ist.

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt.

Es zeigt:
- Fig. 1: eine Schnittansicht eines Kugelgelenks,
- Fig. 2: eine Schnittansicht eines alternativen Kugelgelenks,
- Fig. 3: eine Detailansicht des Kugelgelenks nach Fig. 1, und
- Fig. 4: eine Detailansicht des Kugelgelenks nach Fig. 2.

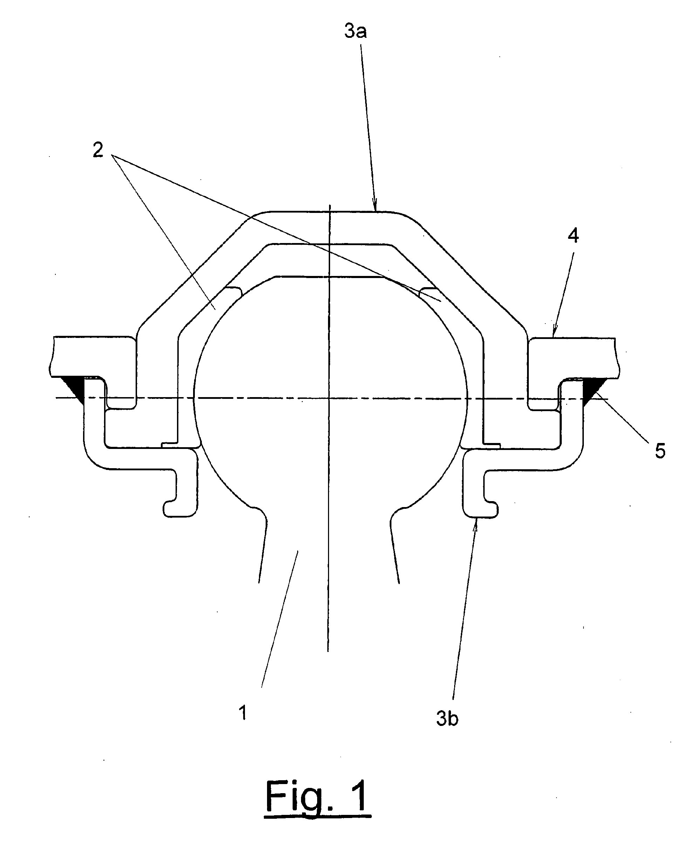

In Fig. 1 ist schematisch der Aufbau eines Kugelgelenks dargestellt. Das Kugelgelenk besteht aus einem Kugelzapfen 1, der in einer Lagerschale 2, welche als ein- oder mehrteilige Kugelschale ausgebildet ist, gelagert ist. Die Lagerschale 2 ist dabei so ausgebildet, dass sie formschlüssig zwischen einem ersten und einem zweiten Kugelgelenkgehäuseteil 3a, 3b gelagert ist. An die beiden Kugelgelenkgehäuse 3a, 3b schließt ein Anschlussteil 4, vorzugsweise ein Lenkergehäuse, so zwischen den beiden Kugelgelenkgehäuseteilen 3a, 3b an, dass es eine horizontale Verschiebung der beiden Kugelgelenkgehäuseteile 3a, 3b und eine vertikale Verschiebung eines Kugelgelenkgehäuseteils 3a verhindert. Die Kugelgelenkeinzelteile 1, 2, 3a, 3b und das Anschlussteil 4 sind konstruktiv so ausgelegt, dass sie nach dem Zusammenfügen in einem Schritt, nämlich durch Verschweißen mindestens eines Kugelgelenkgehäuseteils 3b mit dem Anschlussteil 4, eine komplett gefertigte Einheit bilden.

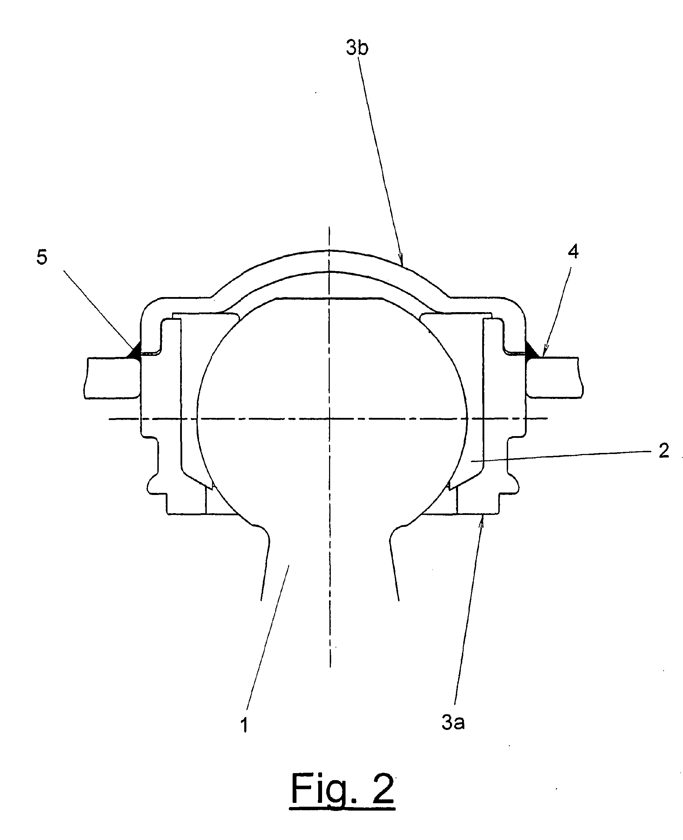

Fig. 2 stellt eine alternative konstruktive Auslegung der Kugelgelenk-Lenkergehäuseverbindung dar. Hierbei ist der Kugelzapfen 1 ebenfalls in einer als ein- oder mehrteilige Kugelschale ausgebildete Lagerschale 2 gelagert, welche formschlüssig zwischen zwei Kugelgelenkgehäuseteilen 3a, 3b angeordnet ist. Die Kugelgelenkgehäuseteile 3a, 3b und das Anschlussteil 4 sind hierbei jedoch so angeordnet, dass die drei Teile an einer Stelle miteinander gefügt, genauer verschweißt werden können. Hierbei verhindert die Schweißnaht 5 eine Bewegung beider Gehäuseteile 3a, 3b in - bezogen auf die Längsachse des unausgelenkten Kugelzapfens - axialer Richtung.

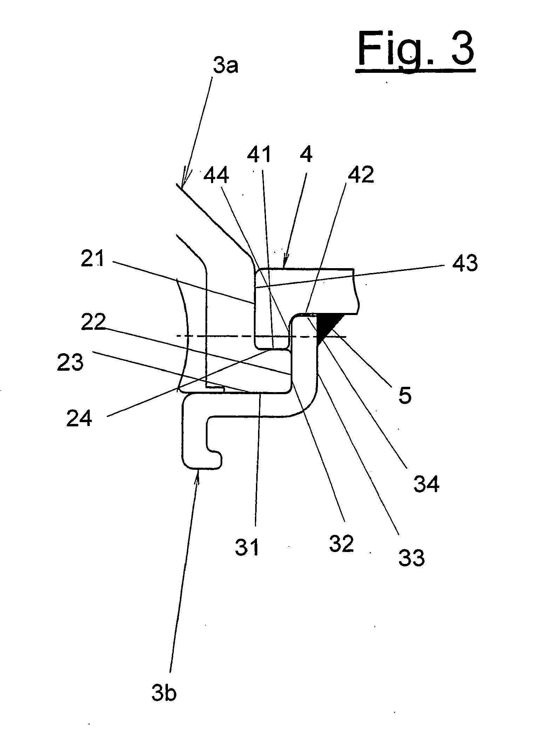

In Fig. 3 sind die Kontaktflächen der drei Teile Anschlussteil 4, erstes Kugelgelenkgehäuseteil 3a und zweites Kugelgelenkgehäuseteil 3b angezogen. Dabei sind die Enden der einzelnen Teile im wesentlichen L-förmig ausgebildet und um 90° zueinander gedreht platziert, so dass jedes Teil zu jedem anderen Teil zwei Kontaktflächen aufweist. Dabei berühren die Flächen 41 und 43 des Anschlussteils 4 die Flächen 21 und 24 des ersten Kugelgelenkgehäuseteils 3a. Das Anschlussteil 4 ist ferner so zwischen dem Kugelgelenkgehäuseteil 3a und dem Kugelgelenkgehäuseteil 3b eingepasst, dass es mit seinen Flächen 42 und 44 das Kugelgelenkgehäuseteil 3b an dessen Flächen 32 und 34 berührt. Die Flächen 32 und 31 des zweiten Kugelgelenkgehäuses 3b berühren die Flächen 22 und 23 des ersten Kugelgelenkgehäuses 3a. Die Schweißnaht 5 verbindet die drei sich gegenseitig teilweise umschließenden Teile an der Fläche 33 des zweiten Kugelgelenkgehäuses 3b und der Fläche 42 des Anschlussteils 4 ortsfest. Aufgrund der L-förmigen Ausbildung und der gedrehten Anordnung der Teile zueinander ist mit der ortsfesten Verbindung des zweiten Kugelgelenkgehäuses 3b und des Anschlussteils 4 zwangsweise das erste Kugelgelenkgehäuse 3a ortsfest mit dem zweiten Kugelgelenkgehäuse 3b und dem Anschlussteil 4 verbunden.

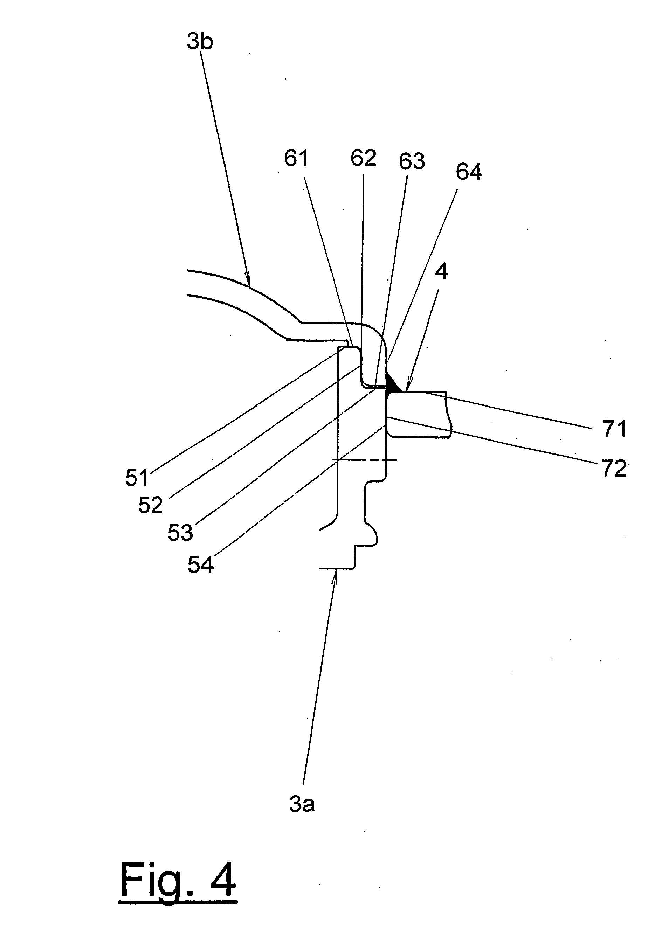

Analog zu Fig. 3 sind in Fig. 4 die Kontaktflächen der drei Teile Anschlussteil 4, erstes und zweites Kugelgelenkgehäuse 3a,3b angezogen. Dabei sind die Enden der beiden Kugelgelenkgehäuseteile 3a, 3b im wesentlichen L-förmig ausgebildet. Dabei sind die beiden Kugelgelenkgehäuseteile 3a, 3b so angeordnet, dass sich jeweils die Flächen 61 und 51, 62 und 52 sowie 63 und 53 der Kugelgelenkgehäuseteile 3a, 3b berühren. Die Oberflächen 64 und 54 der beiden Kugelgelenkgehäuseteile 3a, 3b schließen bündig ab. Das Anschlussteil 4 stößt seitlich stumpf auf die Oberflächen 54 und 64 der Kugelgelenkgehäuseteile 3a, 3b. Dabei befindet sich das Anschlussteil 4 nur knapp über oder unter der Trennlinie zwischen den beiden Kugelgelenkgehäuseteilen 3a, 3b. Mittels eines Verbindungselements, vorzugsweise einer Schweißnaht 5, sind das Anschlussteil 4 und die beiden Kugelgelenkgehäuseteile 3a, 3b ortsfest verbunden. Die Schweißnaht 5 ist dabei so platziert; dass sie die Trennlinie der Kugelgelenkgehäuseteile 3a, 3b überdeckt.

### Bezugszeichenliste

- 1: Kugelzapfen
- 2: Lagerschale
- 3a: Erstes Kugelgelenkgehäuseteil
- 3b: Zweites Kugelgelenkgehäuseteil
- 4: Anschlussteil
- 5: Schweißnaht
- 21: Oberfläche
- 22: Anlagefläche
- 23: Auflagefläche
- 24: Oberfläche
- 31: Oberfläche
- 32: Anlagefläche
- 33: Oberfläche
- 34: Auflagefläche
- 41: Anlagefläche
- 42: Auflagefläche
- 43: Anlagefläche
- 44: Anlagefläche
- 51: Auflagefläche
- 52: Anlagefläche
- 53: Auflagefläche
- 54: Anlagefläche
- 61: Auflagefläche
- 62: Anlagefläche
- 63: Auflagefläche
- 64: Oberfläche
- 71: Oberfläche
- 72: Anlagefläche

## Patentansprüche

1. Verfahren zur Montage von Kugelgelenken mit mindestens einem Anschlussteil, wobei
- ein erstes Kugelgelenkgehäuseteil (3a) einer Montagevorrichtung zugeführt wird,
- ein Kugelzapfen (1) umgeben von einer Lagerschale (2) in das erste Kugelgelenkgehäuseteil (3a) eingesetzt wird,
- ein zweites, das Kugelgelenk schließendes Gehäuseteil (3b) an dem ersten Kugelgelenkgehäuseteil (3a) positioniert wird, sowie
- ein Anschlussteil (4) zu dem Kugelgelenkgehäuse (3a, 3b) platziert wird und
- die Gehäuseteile (3a, 3b) miteinander und mit dem Anschlussteil (4) kraft-, form- und/oder stoffschlüssig über eine entsprechende Verbindung (5) gefügt werden.

2. Verfahren nach Anspruch 1, **dadurch gekennzeichnet,**
**dass** das Kugelgelenk und das Anschlussteil (4) stoffschlüssig mittels Schweißverfahren, durch Löten oder über eine Klebeverbindung miteinander gefügt werden.

3. Verfahren nach einem der vorherigen Ansprüche, **dadurch gekennzeichnet,**
**dass** das Zusammenfügen der Kugelgelenkgehäuseteile (3a, 3b) und des Anschlussteils (4) mittels Laserstrahlschweißen realisiert wird.

4. Verfahren nach Anspruch 1 oder 2, **dadurch gekennzeichnet,**
**dass** das Zusammenfügen der Kugelgelenkgehäuseteile (3a, 3b) und des Anschlussteils (4) mittels Punktschweißung erfolgt.

5. Verfahren nach einem der Ansprüche 1 bis 3, **dadurch gekennzeichnet,**
**dass** das Zusammenfügen der Kugelgelenkgehäuseteile (3a, 3b) und des Anschlussteils (4) mittels umlaufender Schweißnaht (5) erfolgt.

6. Verfahren nach einem der vorherigen Ansprüche, **dadurch gekennzeichnet,**
**dass** das Anschlussteil (4) das Lenkergehäuse eines Querlenkers eines Kraftfahrzeuges ist.

7. Verfahren nach einem der vorherigen Ansprüche, **dadurch gekennzeichnet,**
**dass** die Kugelgelenkgehäuseteile (3a, 3b) mittels Umformverfahren hergestellt werden.

8. Vorrichtung zur Montage von Kugelgelenken mit mindestens einem Anschlussteil,
**dadurch gekennzeichnet,**
**dass** mindestens eine Zuführeinrichtung zum Zuführen eines ersten Kugelgelenkgehäuseteils in eine Montageeinrichtung vorgesehen ist, die zum Einlegen mindestens eines Kugelzapfens und einer Lagerschale in das erste Kugelgelenkgehäuse sowie zum Zuführen eines zweiten, das Kugelgelenk schließende Gehäuseteiles (3a) dient und die zum Zuführen des Anschlussteils zu dem Kugelgelenkgehäuse ausgebildet ist und
**dass** wenigstens eine Fügeeinrichtung vorhanden ist, welche mindestens zum Fügen des zuletzt zugeführten Gehäuseteils (3b) mit dem Anschlussteil (4) über eine entsprechende Verbindung geeignet ist.

9. Kugelgelenk mit mindestens einem Kugelzapfen (1), einer Lagerschale (2), zwei Kugelgelenkgehäuseteilen (3a,3b) sowie einem Anschlussteil (4), **dadurch gekennzeichnet,**
**dass** das erste Kugelgelenkgehäuseteil (3a) mit dem zweiten Kugelgelenkgehäuseteil (3b) und dem Anschlussteil (4) formschlüssig gehaltert ist und das zweite Kugelgelenkgehäuseteil mit dem Anschlussteil (4) über eine Verbindung stoffschlüssig miteinander verbunden ist oder
**dass** das erste Kugelgelenkgehäuseteil (3a) mit dem zweiten Kugelgelenkgehäuseteil (3b) und dem Anschlussteil (4) über eine Verbindung stoffschlüssig miteinander verbunden sind.

10. Kugelgelenk nach Anspruch 9 **dadurch gekennzeichnet,**
**dass** das zweite Kugelgelenkgehäuseteil (3b) eine äußere stirnseitige Auflagefläche (31) aufweist auf der eine äußere stirnseitige Auflagefläche (23) des ersten Kugelgelenkgehäuseteils (3a) aufliegt und das zweite Kugelgelenkgehäuseteil (3b) eine stirnseitige äußere Anlagefläche (32) aufweist an der eine äußere stirnseitige Anlagefläche (22) des ersten Kugelgelenkgehäuseteils (3a) anliegt, wobei ein Anschlussteil (4) zwischen dem ersten und dem zweiten Kugelgelenkgehäuseteil (3a, 3b) so eingepasst ist, dass es mit einer ersten äußeren Oberfläche (21) des ersten Kugelgelenkgehäuseteils (3a) und einer zweiten äußeren Oberfläche (32) des zweiten Kugelgelenkgehäuseteils (3b) und einer zweiten äußeren stirnseitigen Auflagefläche (34) des zweiten Kugelgelenkgehäuseteils (3b) in Kontakt steht und das Anschlussteil (4) mit dem zweiten Kugelgelenkgehäuseteil (3b) über eine stoffschlüssige Verbindung zwischen der Auflagefläche (42) des Anschlussteils (4) und der äußeren Oberfläche (33) des zweiten Kugelgelenkgehäuseteils (3b) ortsfest verbunden ist.

11. Kugelgelenk nach Anspruch 9, **dadurch gekennzeichnet,**
**dass** das erste Kugelgelenkgehäuseteil (3a) eine erste äußere stirnseitige Auflagefläche (51) auf der eine erste äußere Auflagefläche (61) des zweiten Kugelgelenkgehäuseteils (3b) aufliegt, eine zweite äußere Auflagefläche (53) auf der eine zweite äußere Auflagefläche (63) des zweiten Kugelgelenkgehäuseteils (3b) und eine erste äußere Anlagefläche (52) an der eine äußere Anlagefläche (62) des zweiten Kugelgelenkgehäuseteils (3b) anliegt aufweist, wobei ein Anschlussteil (4) das mit einer äußeren Anlagefläche (72) an einer zweiten äußeren Anlagefläche (54) des ersten Kugelgelenkgehäuseteils (3a) anliegt und
das Anschlussteil (4) mit dem ersten Kugelgelenkgehäuseteil (3a) über eine stoffschlüssige Verbindung zwischen einer äußeren Oberfläche (71) des Anschlussteils (4), einer äußeren Oberfläche (64) des zweiten Kugelgelenkgehäuseteils (3b) und der zweiten äußeren Anlagefläche (54) des ersten Kugelgelenkgehäuseteils (3a) verbunden ist.

## Claims

1. Method of assembling ball joints with at least one connection part, wherein
- a first ball joint housing part (3a) is fed to an assembly apparatus,
- a ball journal (1) surrounded by a bearing shell (2) is inserted into the first ball joint housing part (3a),
- a second housing part (3b) closing the ball joint is positioned on the first ball joint housing part (3a), and
- a connection part (4) is placed relative to the ball joint housing (3a, 3b) and
- the housing parts (3a, 3b) are joined to one another and to the connection part (4) non-positively, positively and/or cohesively by means of a suitable connection (5).

2. Method according to claim 1, **characterized in**
**that** the ball joint and the connection part (4) are joined to one another cohesively by means of welding techniques, by soldering or by an adhesive connection.

3. Method according to one of the preceding claims,
**characterized in**
**that** the joining-together of the ball joint housing parts (3a, 3b) and the connection part (4) is realized by means of laser beam welding.

4. Method according to claim 1 or 2, **characterized in that** the joining-together of the ball joint housing parts (3a, 3b) and the connection part (4) is effected by means of spot welding.

5. Method according to one of claims 1 to 3,
**characterized in**
**that** the joining-together of the ball joint housing parts (3a, 3b) and the connection part (4) is effected by means of a circumferential weld seam (5).

6. Method according to one of the preceding claims,
**characterized in**
**that** the connection part (4) is the control arm housing of a transverse control arm of a motor vehicle.

7. Method according to one of the preceding claims,
**characterized in**
**that** the ball joint housing parts (3a, 3b) are manufactured by means of shaping techniques.

8. Apparatus for assembling ball joints with at least one connection part, **characterized in**
**that** at least one feed device is provided for feeding a first ball joint housing part into an assembly device, which is used to insert at least one ball journal and a bearing shell into the first ball joint housing and to feed a second housing part (3a) closing the ball joint and which is designed to feed the connection part to the ball joint housing, and that at least one jointing device is provided, which is suitable at least for joining the last-fed housing part (3b) to the connection part (4) by means of a suitable connection.

9. Ball joint comprising at least a ball journal (1), a bearing shell (2), two ball joint housing parts (3a, 3b) and a connection part (4), **characterized in**
**that** the first ball joint housing part (3a) is positively supported with the second ball joint housing part (3b) and the connection part (4), and the second ball joint housing part is connected to the connection part (4) by a connection cohesively to one another or
**that** the first ball joint housing part (3a) with the second ball joint housing part (3b) and the connection part (4) are connected by a connection cohesively to one another.

10. Ball joint according to claim 9, **characterized in**
**that** the second ball joint housing part (3b) has an outer end supporting face (31), on which an outer end supporting face (23) of the first ball joint housing part (3a) rests, and the second ball joint housing part (3b) has an end outer abutment face (32), against which an outer end abutment face (22) of the first ball joint housing part (3a) lies, wherein a connection part (4) is fitted between the first and the second ball joint housing part (3a, 3b) such that it is in contact with a first outer surface (21) of the first ball joint housing part (3a) and with a second outer surface (32) of the second ball joint housing part (3b) and with a second outer end supporting face (34) of the second ball joint housing part (3b), and the connection part (4) is connected in a fixed manner to the second ball joint housing part (3b) by a cohesive connection between the supporting face (42) of the connection part (4) and the outer surface (33) of the second ball joint housing part (3b).

11. Ball joint according to claim 9, **characterized in**
**that** the first ball joint housing part (3a) has a first outer end supporting face (51), on which a first outer supporting face (61) of the second ball joint housing part (3b) rests, a second outer supporting face (53), on which a second outer supporting surface (63) of the second ball joint housing part (3b), and a first outer abutment face (52), against which an outer abutment face (62) of the second ball joint housing part (3b) lies, wherein a connection part (4), which lies with an outer abutment face (72) against a second outer abutment face (54) of the first ball joint housing part (3a), and the connection part (4) is connected to the first ball joint housing part (3a) by a cohesive connection between an outer surface (71) of the connection part (4), an outer surface (64) of the second ball joint housing part (3b) and the second outer abutment face (54) of the first ball joint housing part (3a).

## Revendications

1. Procédé de montage d'articulations à rotule incluant au moins un élément de raccordement, dans lequel
- une première partie (3a) de boîtier d'articulation à rotule est assemblée à un dispositif de montage,
- un pivot à rotule (1) entouré d'une coque formant palier (2) est inséré dans la première partie (3a) de boîtier d'articulation à rotule,
- une seconde partie (3b) de boîtier d'articulation à rotule, qui referme l'articulation à rotule, est positionnée sur la première partie (3a) du boîtier d'articulation à rotule, et
- un élément de raccordement (4) est mis en place par rapport au boîtier d'articulation à rotule (3a, 3b), et
- les parties (3a, 3b) du boîtier sont reliées l'une à l'autre, et à l'élément de raccordement (4), par couplage de forces, de formes et/ou de matériaux, par l'intermédiaire d'une liaison correspondante (5).

2. Procédé selon la revendication 1, **caractérisé en ce que** l'articulation à rotule et l'élément de raccordement (4) sont reliés l'un à l'autre par couplage de matériaux, à l'aide d'un procédé de soudage ou de brasage, ou via une liaison de collage.

3. Procédé selon l'une des revendications précédentes, **caractérisé en ce que** l'assemblage des parties (3a, 3b) du boîtier d'articulation à rotule et de l'élément de raccordement (4) est réalisé par soudage au laser.

4. Procédé selon l'une des revendications 1 ou 2, **caractérisé en ce que** l'assemblage des parties (3a, 3b) du boîtier d'articulation à rotule et de l'élément de raccordement (4) est réalisé par soudage par points.

5. Procédé selon l'une des revendications 1 à 3, **caractérisé en ce que** l'assemblage des parties (3a, 3b) du boîtier d'articulation à rotule et de l'élément de raccordement est réalisé au moyen d'un cordon de soudure périphérique (5).

6. Procédé selon l'une des revendications précédentes, **caractérisé en ce que** l'élément de raccordement (4) est le boîtier de bras oscillant d'un bras oscillant transversal d'un véhicule automobile.

7. Procédé selon l'une des revendications précédentes, **caractérisé en ce que** les parties (3a, 3b) du boîtier d'articulation à rotule sont fabriquées à l'aide d'un procédé de formage.

8. Dispositif de montage d'articulations à rotule incluant au moins un élément de raccordement, **caractérisé en ce que**
au moins un dispositif d'assemblage pour l'assemblage dans la première partie du boîtier d'articulation à rotule est prévu, qui permet l'insertion d'au moins un pivot à rotule et d'une coque formant palier dans la première partie du boîtier d'articulation à rotule, et d'assembler une seconde partie (3a) du boîtier d'articulation à rotule qui referme l'articulation à rotule, et qui est configuré pour assembler l'élément de raccordement au boîtier d'articulation à rotule, et **en ce que**
au moins un dispositif de liaison est prévu, qui convient au moins pour relier la dernière partie amenée (3b) du boîtier d'articulation à rotule à l'élément de raccordement (4) par l'intermédiaire d'une liaison correspondante.

9. Articulation à rotule comprenant au moins un pivot à rotule (1), une coque formant palier (2), deux parties (3a, 3b) de boîtier d'articulation à rotule, et un élément de raccordement (4),
**caractérisée en ce que** la première partie (3a) de boîtier d'articulation à rotule est maintenue sur la seconde partie (3b) du boîtier d'articulation à rotule et l'élément de raccordement (4) par conjugaison des formes,
et que la seconde partie du boîtier d'articulation à rotule est reliée à l'élément de raccordement (4) par l'intermédiaire d'une liaison à couplage de matériaux,
ou que la première partie (3a) du boîtier d'articulation à rotule et la seconde partie (3b) du boîtier d'articulation à rotule et l'élément de raccordement (4) sont reliés les uns aux autres par l'intermédiaire d'une liaison à couplage de matériaux.

10. Articulation à rotule selon la revendication 9, **caractérisée en ce que** la seconde partie (3b) du boîtier d'articulation à rotule comporte une surface d'appui frontale extérieure (31), sur laquelle s'appuie une surface d'appui frontale extérieure (23) de la première partie (3a) du boîtier d'articulation à rotule, et la seconde partie (3b) du boîtier d'articulation à rotule comporte une surface de contact frontale extérieure (32), que contacte une surface de contact frontale extérieure (22) de la première partie (3a) du boîtier d'articulation à rotule, un élément de raccordement (4) étant ajusté entre les première et seconde parties (3a, 3b) du boîtier d'articulation à rotule de manière telle qu'il soit en contact avec une première surface extérieure (21) de la première partie (3a) du boîtier d'articulation à rotule et avec une deuxième surface extérieure (32) de la seconde partie (3b) du boîtier d'articulation à rotule, et avec une deuxième surface d'appui frontale extérieure (34) de la seconde partie (3b) du boîtier d'articulation à rotule, et que l'élément de raccordement (4) soit relié de façon fixe et stable à la seconde partie (3b) du boîtier d'articulation à rotule par l'intermédiaire d'une liaison par couplage de matériaux entre la surface d'appui (42) de l'élément de raccordement (4) et la surface extérieure (33) de la seconde partie (3b) du boîtier d'articulation à rotule.

11. Articulation à rotule selon la revendication 9, **caractérisée en ce que** la première partie (3a) du boîtier d'articulation à rotule comporte une première surface d'appui frontale extérieure (51), sur laquelle s'appuie une première surface d'appui extérieure (61) de la seconde partie (3b) du boîtier d'articulation à rotule, une deuxième surface d'appui extérieure (53) sur laquelle s'appuie une deuxième surface d'appui extérieure (63) de la seconde partie (3b) du boîtier d'articulation à rotule, et une première surface de contact extérieure (52), que contacte une surface de contact extérieure (62) de la seconde partie (3b) d'articulation à rotule, un élément de raccordement (4), dont une surface de contact extérieure (72) est en contact avec une deuxième surface de contact extérieure (54) de la première partie (3a) du boîtier d'articulation à rotule, et **en ce que** l'élément de raccordement (4) est relié à la première partie (3a) du boîtier d'articulation à rotule par l'intermédiaire d'une liaison à couplage de matériaux entre une surface extérieure (71) de l'élément de raccordement (4), une surface extérieure (64) de la seconde partie (3b) du boîtier d'articulation à rotule, et la deuxième surface de contact extérieure (54) de la première partie (3a) du boîtier d'articulation à rotule.
